(19) **Europäisches Patentamt**
**European Patent Office**
**Office européen des brevets**

(11) **EP 1 630 456 B1**

(12) **EUROPEAN PATENT SPECIFICATION**

(45) Date of publication and mention
of the grant of the patent:
**24.08.2011 Bulletin 2011/34**

(51) Int Cl.:
***F16H 25/22*** *(2006.01)*    ***B62D 5/04*** *(2006.01)*

(21) Application number: **04735374.3**

(22) Date of filing: **28.05.2004**

(86) International application number:
**PCT/JP2004/007736**

(87) International publication number:
**WO 2004/106776 (09.12.2004 Gazette 2004/50)**

(54) **BALL SCREW AND ELECTRIC POWER STEERING DEVICE INCLUDING THE SAME**

KUGELGEWINDE UND ELEKTRISCHE SERVOLENKUNGSVORRICHTUNG MIT DIESEM

VIS A BILLES, ET DIRECTION ASSISTEE ELECTRIQUE COMPRENANT CETTE VIS

(84) Designated Contracting States:
**DE FR**

(30) Priority: **30.05.2003 JP 2003155413**

(43) Date of publication of application:
**01.03.2006 Bulletin 2006/09**

(73) Proprietor: **JTEKT Corporation**
**Osaka-shi**
**Osaka 542-8502 (JP)**

(72) Inventors:
• **MIZUHARA, Masato**
**c/o JTEKT Corporation.**
**Chuo-ku,**
**Osaka-shi,**
**Osaka 542-8502 (JP)**
• **MIYATA, Atsuya**
**c/o JTEKT Corporation.**
**Chuo-ku**
**Osaka-shi,**
**Osaka 542-8502 (JP)**

• **MURAKAMI, Tetsuya**
**c/o JTEKT Corporation.**
**Chuo-ku**
**Osaka-shi,**
**Osaka 542-8502 (JP)**
• **TAKADA, Nobushige**
**c/o JTEKT Corporation.**
**Chuo-ku**
**Osaka-shi,**
**Osaka 542-8502 (JP)**

(74) Representative: **Steil, Christian et al**
**Witte, Weller & Partner**
**Postfach 10 54 62**
**70047 Stuttgart (DE)**

(56) References cited:
**JP-A- 2000 309 279    JP-A- 2002 061 731**
**JP-A- 2003 097 664    US-A- 2 298 011**

**Description**

BACKGROUND OF THE INVENTION

Field of the Invention

The present invention relates to a ball screw, and to an electric power steering device.

Description of Related Art

Rack-and-pinion type electric power steering devices for motor vehicles include an electric power steering device of a so-called rack-assist type which is adapted to transmit an output of an electric motor to a steering shaft (rack shaft) through a ball screw.

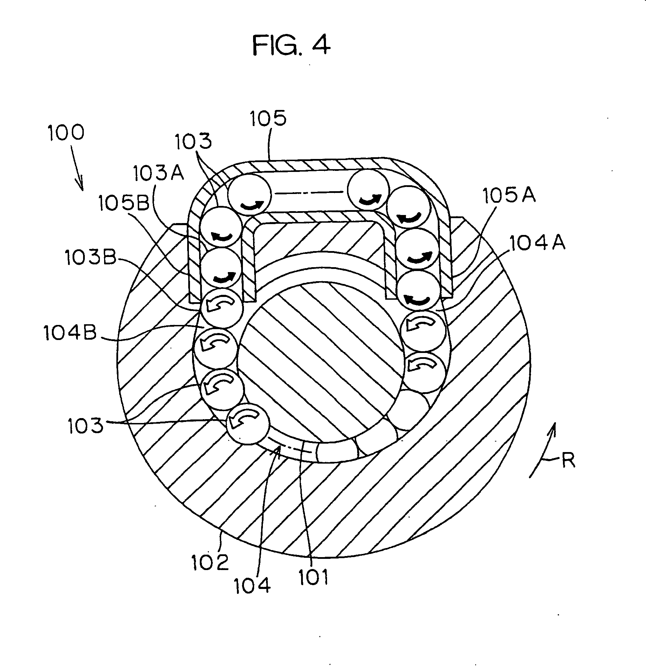

Fig. 4 is a sectional view illustrating a conventional ball screw. Referring to Fig. 4, the ball screw 100 includes a screw shaft 101 provided, for example, as a part of the steering shaft and having a thread groove formed in an outer periphery thereof, and a nut 102 surrounding the screw shaft 101 and having a thread groove formed in an inner periphery thereof. The nut 102 threadingly engages with the screw shaft 101 via a plurality of balls 103.

The balls 103 each rolls in a helical raceway 104 defined between the thread grooves of the screw shaft 101 and the nut 102, and are circulated, for example, from one end 104A to the other end 104B of the raceway through a circulation path 105 (see, for example, Japanese Unexamined Patent Publication No. 2002-181155, published as JP 2002 181155).

During relative rotation of the screw shaft 101 and the nut 102, for example, when the nut 102 is rotated in an arrow direction R relative to the screw shaft 101, as shown in Fig. 4, balls 103 located in the helical raceway 104 of the ball screw 100 rotate about their axes in the same direction (in a white arrow direction).

On the other hand, each two adjacent balls 103 located in the circulation path 105 rotate about their axes in opposite directions (e.g., in black arrow directions) due to contact friction therebetween. Therefore, balls 103 located at one end 105A and the other end 105B of the circulation path 105 may rotate about their axes in opposite directions.

In this case, the ball 103A located at the other end 105B of the circulation path 105 and a ball 103B located at the other end 104B of the helical raceway 104 contact each other in such a way that the rotation (movement) of the balls is prevented by a friction force acting therebetween. This increases movement resistances of the balls 103 in the circulation path 105. As a result, the balls 103 are liable to be jammed in the circulation path 105, making it hard for the balls to move in the circulation path 105.

Document JP 2002061731, which constitutes the closest prior art, slows a ball screw according to the preamble of independent claim 1. An electric power steering comprising a ball screw according to claim 1 in claimed in claim 8.

Not only the ball screw of the electric power steering device but also ordinary ball screws having a circulation path suffer from this type of problem.

It is therefore an object of the present invention to provide a ball screw which allows for smooth circulation of balls, and an electric power steering device including the ball screw.

SUMMARY OF THE INVENTION

According to one aspect of the present invention to achieve the aforesaid object, there is provided a ball screw which includes a screw shaft, a nut surrounding the screw shaft, and a plurality of balls engageable with the screw shaft and the nut. The ball screw further includes a first helical raceway defined between the screw shaft and the nut and having first and second ends, and a second raceway having first and second ends respectively connected to the first and second ends of the first raceway for circulating the balls into the first raceway. The second raceway accommodates an odd number of balls at the maximum at a time.

According to this inventive aspect, a ball located at the first end of the second raceway rotates about its axis in the same direction as a ball located at the second end of the second raceway when the screw shaft and the nut are rotated relative to each other.

Thus, the ball located at the first end of the second raceway and a ball located at the first end of the first raceway are kept in smooth rolling contact with each other without preventing the rotation thereof. Further, the ball located at the second end of the second raceway and a ball located at the second end of the first raceway are kept in smooth rolling contact with each other without preventing the rotation thereof.

Therefore, the balls can be smoothly moved into the second raceway from the first raceway and smoothly moved into the first raceway from the second raceway. This prevents the balls from clogging in the second raceway.

BRIEF DESCRIPTION OF THE DRAWINGS

Fig. 1 is a schematic sectional view illustrating the schematic construction of an electric power steering device according to one embodiment of the present invention;

Fig. 2 is a sectional view taken along a line II-II in Fig. 1;

Fig. 3 is a schematic sectional view illustrating the schematic construction of a major potion of an electric power steering device according to another embodiment of the present invention;

Fig. 4 is a sectional view illustrating a conventional ball screw.

DESCRIPTION OF THE PREFERRED EMBODIMENTS

Preferred embodiments of the present invention will be described with reference to the attached drawings.

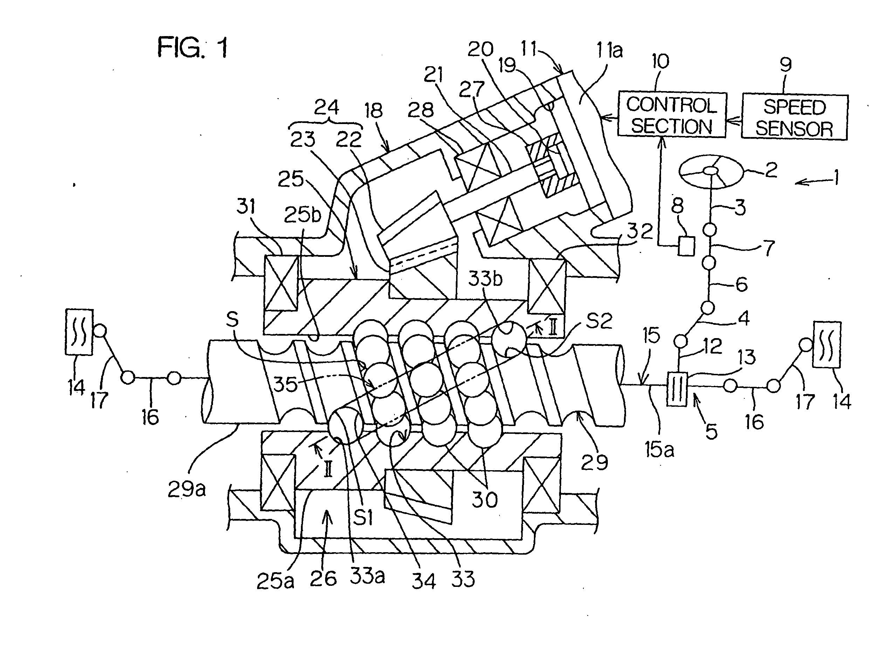

Fig. 1 is a schematic sectional view illustrating the schematic construction of an electric power steering device 1 according to one embodiment of the present invention. Referring to Fig. 1, the electric power steering device 1 includes a steering input shaft 3 coupled to a steering member 2 such as a steering wheel, a steering output shaft 6 coupled to a steering mechanism 5 via an intermediate shaft 4, and a torsion bar 7 coaxially coupling the input shaft 3 to the output shaft 6. The electric power steering device 1 further includes a torque sensor 8 which detects a steering torque on the basis of a relative rotational displacement between the input shaft 3 and the output shaft 6 via the torsion bar 7, and a steering assist electric motor 11 which is controlled to be driven by a control section 10 on the basis of the torque detected by the torque sensor 8, a vehicle speed detected by a vehicle speed sensor 9 and the like.

The steering mechanism 5 includes a pinion 13 provided at an end of a pinion shaft 12 coupled to the intermediate shaft 4, a steering shaft 15 extending transversely of a motor vehicle and having a rack·15a meshed with the pinion 13, and knuckle arms 17 respectively coupled to opposite ends of the steering shaft 15 via tie rods 16 and supporting corresponding vehicle wheels 14.

The knuckle arms 17 are turned by axial movement of the steering shaft 15, thereby achieving the steering of the vehicle wheels 14. The steering shaft 15 is supported in an axially movable manner by a housing 18 via bearings not shown. One end portion of a housing 11a of the electric motor 11 is fitted in a coupling port 19 of the housing 18, and fixed to the housing 18 by a fixing bolt or the like not shown.

Rotation of an output shaft 20 of the electric motor 11 is transmitted to a reduction gear mechanism 24 such as a bevel gear mechanism shown in Fig. 1 and then to a ball screw 26 functioning as a motion converting mechanism thereby to be converted into the axial movement of the steering shaft 15. As a result, a steering assist force is applied to the steering shaft 15.

The reduction gear mechanism 24 includes a first smaller diameter gear 22 coupled to the output shaft 20 of the electric motor 11 via a coupling shaft 21, and a second larger diameter gear 23 fitted around the steering shaft 15 and meshed with the first gear 22. Rotation of the second gear 23 of the reduction gear mechanism 24 is converted into the axial movement of the steering shaft 15 by the ball screw 26 which serves as the motion converting mechanism.

More specifically, one endof the coupling shaft 21 is coupled to the output shaft 20 of the electric motor 11 in a co-rotatable manner via a joint 27 employing, for example, a spline. The coupling shaft 21 is rotatably supported by the housing 18 via a bearing 28. The first gear 22 of the reduction gear mechanism 24 is coupled to the other end of the coupling shaft 21 in a co-rotatable manner.

The ball screw 26 includes a screw shaft 29 provided as part of the steering shaft 15 with its rotation about its axis restricted, a nut 25 (also referred to as "ball nut") surrounding the screw shaft 29 and rotatable together with the second gear 23 of the reduction gear mechanism 24, and a plurality of balls 30 engageable with the screw shaft 29 and the nut 25.

The second gear 23 is fixed to an outer peripheral surface 25a of the nut 25 by a key or the like not shown. Opposite end portions of the nut 25 are rotatably supported by the housing 18 via bearings 31, 32, respectively. Axial movement of the nut 25 is restricted by the bearings 31, 32.

The nut 25 has a first helical groove 33 formed in an inner peripheral surface 25b thereof for rolling the balls. The screw shaft 29 has a second helical groove 34 formed in an outer peripheral surface 29a of the screw shaft 29 for rolling the balls. The first and second helical grooves 33, 34 define a first helical raceway S. The first raceway S has first and second ends S1, S2 which respectively correspond to first and second ends 33a, 33b of the first helical groove 33 of the nut 25.

With the aforesaid arrangement, the nut 25 and the screw shaft 29 threadingly engage with each other via the plurality of balls 30 located in the first raceway S. The screw shaft 29 is axially moved as the nut 25 is rotated.

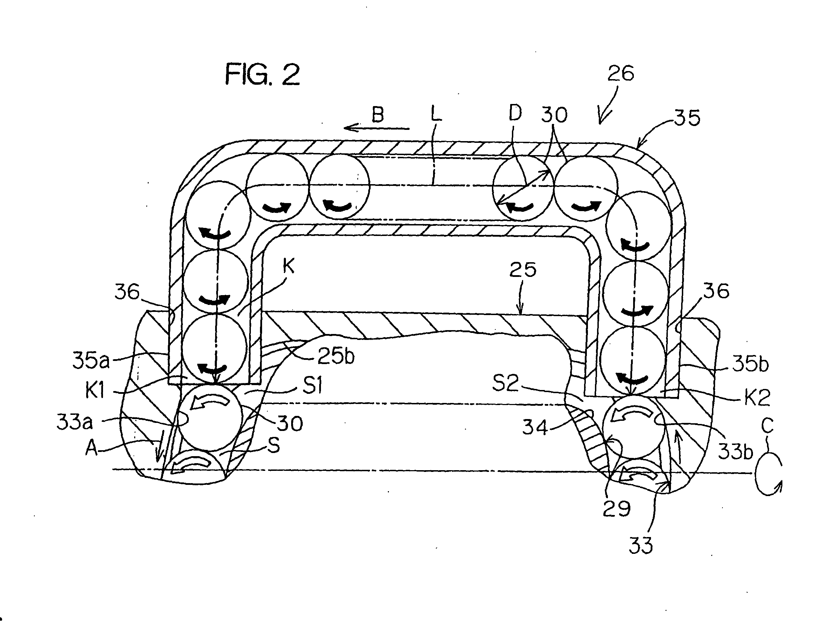

Fig. 2 is a sectional view taken along a line II-II in Fig. 1. Referring to Fig. 2, the balls 30 are circulated into the first helical raceway S through a second raceway K provided, for example, in a U-shaped tube 35.

More specifically, the nut 25 has fixing holes 36 respectively provided in association with the first and second ends S1, S2 of the first raceway S, and first and second ends 35a, 35b of the tube 35 are respectively inserted in the fixing holes 36. The tube 35 is fixed to the nut 25 by press members not shown.

Thus, the first and second ends S1, S2 of the first raceway S are respectively connected to first and second·ends K1, K2 of the second raceway K, whereby the first raceway S and the second raceway K are connected to each other. That is, the first helical raceway S and the second U-shaped raceway K define an endless raceway.

The first raceway S and the second raceway K each have a cross section having a diameter (width) which is substantially equal to (in practice, slightly greater than) the diameter D of each of the balls 30. The ball screw 26 is of a full complement type, in which the balls 30 are arranged in sequence with no gap therebetween throughout the first and second raceways S, K. That is, no retainer is provided between each adj acent pair of balls 30, 30.

The length L of the second raceway K provided in the tube 35 is determined so as to have a length value L1 which satisfies the following expression (I):

$$(2N+1)D1 < L1 < (2N+2)D1 \ \ldots (I)$$

wherein N is an arbitrary integer, and D1 is the value of the diameter of each of the balls 30.

The length value L1 of the second raceway K corresponds to the length of a trace of the center of a ball 30 observed when the ball 30 passes through the second raceway K.

The expression (I) means as follows. If the expression (I) is divided by the diameter value D1 of the ball 30, the following expression (II) is obtained:

$$2N+1 < L1/D1 < 2N+2 \ \ldots (II)$$

Therefore, a value L1/D1 obtained by dividing the length value L1 of the second raceway K by the diameter value D1 of the ball 30 can be expressed by the following expression (III):

$$L1/D1 = (2N+1) + e$$

That is, the value L1/D1 is expressed by the sum of an odd integer (2N+1) and a decimal fraction e. The odd integer (2N+1) is the maximum number of balls 30 to be accommodated in the second raceway K at a time.

The decimal fraction e of the value L1/D1 is in a range of $0 < e < 1$, preferably $0.2 \leq e \leq 0.8$, more preferably $0.4 \leq e \leq 0.6$.

Where N=10 and D1=4mm, for example, the length value L1 of the second raceway K is in a range of 84mm<L1<88mm.

In this embodiment, the value L1 equals to 21.5D1 and, hence, is 86mm. The value L1/D1 is 21.5. The maximum number (2N+1) of the balls to be accommodated in the second raceway K at a time is 21. The decimal fraction e of the value L/D1 is 0.5.

With the aforesaid arrangement, the balls 30 operate in the following manner in the ball screw 26. When the nut 25 receives the output of the electric motor 11 thereby to be rotated in one direction (e.g., in an arrow direction C), balls 30 located in the first raceway S moves around the screw shaft 29 in an arrow direction A while rotating about their axes in the same direction (in a white arrow direction) by receiving the rotation of the nut 25.

On the other hand, each two adjacent balls 30 located in the second raceway K rotates about their axes in opposite directions. That is, each two adjacent balls 30 rotate about their axes in opposite directions (e.g., in black arrow directions) due to contact friction in the second raceway K, while moving in an arrow direction B, for example, from the first end K1 toward the second end K2 in the second raceway K. It is noted that, if the nut 25 is rotated in a direction opposite to the arrow direction C, the balls 30 move from the second end K2 toward the first end K1.

According to this embodiment, the length value L1 of the second raceway K for the circulation of the balls 30 is determined so as to satisfy the expression (I), whereby the maximum number of the balls to be accommodated in the second raceway K at a time is odd. That is, an odd number of balls 30 are completely accommodated in the second raceway K in which each two adjacent balls rotates about their axes in opposite directions. As a result, balls 30 located at the first end K1 and the second end K2 of the second raceway K can rotate about their axes in the same direction.

Thus, the ball 30 located at the first end K1 of the second raceway K and a ball 30 located at the first end S1 of the first raceway S are kept in smooth rolling contact with each other without preventing rotation thereof. Similarly, the ball 30 located at the second end K2 of the second raceway K and a ball 30 located at the second end S2 of the first raceway S are kept in smooth rolling contact with each other without preventing rotation thereof.

As a result, the balls 30 can be smoothly moved into the second raceway K from the first raceway S and smoothly moved into the first raceway S from the second raceway K. This prevents the balls 30 from being jammed in the second raceway K.

The prevention of the jamming of the balls 30 in the second raceway K ensures very smooth rotation of the nut 25, thereby making it possible to evenly transmit the torque of the electric motor 11 to the steering shaft 15. Thus, an excellent steering feeling can be provided.

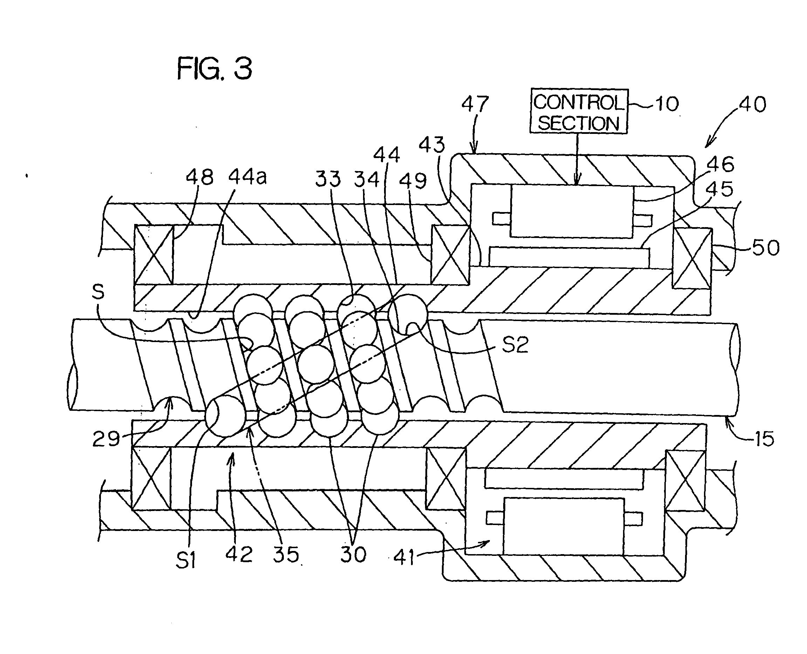

Fig. 3 is a schematic sectional view illustrating the schematic construction of a major potion of an electric power steering device 40 according to another embodiment of the present invention. In the embodiment shown in Figs. 1 and 2, the output shaft 20 of the electric motor 11 is not arranged coaxially with the ball screw 26, and the output of the electric motor 11 is transmitted to the ball screw 26 via the reduction gear mechanism 24.

In this embodiment, in contrast, an output shaft 43 of an electric motor 41 such as a brushless motor, for example, is arranged coaxially with a ball screw 42 as shown in Fig. 3 so that an output of the electric motor 41 is transmitted directly to the ball screw 42. In the embodiment shown in Fig. 3, components having the same constructions as in the embodiment shown in Figs. 1 and 2 are denoted by the same reference characters as in Figs. 1 and 2, and no explanation will be given thereto.

The output shaft 43 of the electric motor 41 is tubular, and is provided unitarily with a nut 44 of the ball screw 42, for example, in the form of a unitary member. The output shaft 43 is coaxial with the nut 44 and rotatable together with the nut 44. The nut 44 has a first helical groove 33 formed in an inner peripheral surface 44a thereof. A rotor 45 is fixed around the output shaft 43 of the electric motor 41. The rotor 45 is surrounded by an annular stator 46. The stator 46 is fixed to a housing 47. The nut 44 of the ball screw 42 and the output shaft 43 of the electric motor 41 unitarily provided are rotatably supported by the housing 47 via bearings 48, 49, 50. Axial movement of the nut- 44 and the output shaft 43 is restricted by the bearings 49, 50.

This embodiment provides the same actions and effects as the embodiment shown in Figs. 1 and 2.

In the present invention, a top or an end cap, for example, may be used instead of the tube 35. The rotation of the screw shaft may be converted into axial movement of the nut. Further, the ball screw according to the present invention is applicable to general devices other than the electric power steering device.

While the present invention has thus been described in detail by way of the specific embodiments thereof, those skilled in the art who have understood the foregoing will easily come up with alterations, modifications and equivalents of the embodiments. Therefore, the scope of the present invention is to be defined by the following claims and their equivalents.

## Claims

1. A ball screw (26; 42) which includes a screw shaft (29), a nut (25; 44) surrounding the screw shaft (29), and a plurality of balls (30) engageable with the screw shaft (29) and the nut (25; 44), the ball screw (26; 42) comprising:

   a first helical raceway (S) defined between the screw shaft (29) and the nut (25; 44) and having first and second ends (S1, S2); and
   a second raceway (K) having first and second ends (K1, K2) respectively connected to the first and second ends (S1, S2) of the first raceway (S) for circulating the balls (30) into the first raceway (S); **characterised in that** the second raceway (K) accommodates an odd number of balls (30) at the maximum at a time.

2. A ball screw as set forth in claim 1, wherein the second raceway (K) has a length value L1 which satisfies the following expression:

$$(2N + 1) \ D1 < L1 < (2N + 2) \ D1$$

   wherein D1 is a diameter value of each of the balls (30), and N is an arbitrary integer.

3. A ball screw as set forth in claim 2, wherein a value L1/D1 which is obtained by dividing the length value L1 of the second raceway (K) by the diameter value D1 of the ball has a decimal fraction e ranging from 0.2 to 0.8.

4. A ball screw as set forth in claim 2, wherein a value L1/D1 which is obtained by dividing the length value L1 of the second raceway (K) by the diameter value D1 of the ball has a decimal fraction e ranging from 0.4 to 0.6.

5. A ball screw as set forth in claim 1 or 2,
wherein, when the nut (25; 44) is rotated relative to the screw shaft (29), balls (30) moving in the first raceway (S) rotate about their axes in the same direction, and each two adjacent balls (30) moving in the second raceway (K) rotates about their axes in opposite directions.

6. A ball screw as set forth in claim 1 or 2,
wherein the nut (25; 44) has a first helical groove (33) formed in an inner peripheral surface thereof for rolling the balls (30),
wherein the screw shaft (29) has a second helical groove (34) formed in an outer peripheral surface thereof for rolling the balls (30),
wherein the first raceway (S) is defined by the first and second helical grooves (33, 34).

7. A ball screw as set forth in claim 1 or 2, further comprising a U-shaped tube (35) in which the second raceway (K) is provided.

8. An electric power steering device (1; 40) comprising:

a steering assist electric motor (11; 41) including an output shaft (20; 43);
a steering shaft (15) extending transversely of a motor vehicle and axially movable; and
a ball screw (26; 42) which converts rotation of the output shaft (20; 43) of the electric motor (11; 41) into an axial movement of the steering shaft (15);
wherein the ball screw is a ball screw (26; 42) as set forth in any of claims 1 - 7,
wherein the screw shaft (29) is provided coaxially and unitarily with the steering shaft (15); and
wherein the second raceway (K) connects the first and second ends (S1, S2) of the first raceway (S) with each other for circulating the balls (30) from the first end (S2) to the second end (S1) of the first raceway (S).

9. An electric power steering device as set forth in claim 8, wherein the output shaft (43) of the electric motor (41) includes a tubular output shaft (43) surrounding the steering shaft (15) and provided coaxially with the nut (44) in a co-rotatable manner.

10. An electric power steering device as set forth in claim 9, wherein the tubular output shaft (43) and the nut (44) are unitarily provided as a unitary member.

11. An electric power steering device as set forth in claim 9 or 10, wherein the electric motor (41) is a brushless motor.

**Patentansprüche**

1. Kugelumlaufspindel (26; 42), die eine Spindelwelle (29), eine Mutter (25; 44), die die Spindelwelle (29) umgibt, und eine Vielzahl von Kugeln (30) aufweist, die an der Spindelwelle (29) und an der Mutter (25; 44) angreifen können, wobei die Kugelumlaufspindel (26; 42) aufweist:

eine erste schraubenförmige Laufbahn (S), die zwischen der Spindelwelle (29) und der Mutter (25; 44) definiert ist und ein erstes und ein zweites Ende (S1, S2) aufweist; und
eine zweite Laufbahn (K), die ein erstes und ein zweites Ende (K1, K2) aufweist, die mit dem ersten bzw. dem zweiten Ende (S1, S2) der ersten Laufbahn (S) verbunden sind, um die Kugeln (30) in die erste Laufbahn (S) zu zirkulieren;
**dadurch gekennzeichnet, dass**
die zweite Laufbahn (K) zu einem jeweiligen Zeitpunkt maximal eine ungerade Anzahl von Kugeln (30) aufnimmt.

2. Kugelumlaufspindel nach Anspruch 1, wobei die zweite Laufbahn (K) einen Längenwert (L1) aufweist, der den folgenden Ausdruck erfüllt:

$$(2N + 1) \, D1 < L1 < (2N + 2) \, D1$$

wobei D1 ein Durchmesserwert von jeder der Kugeln (30) ist und wobei N eine beliebige Integerzahl ist.

3. Kugelumlaufspindel nach Anspruch 2, wobei ein Wert L1/D1, der erhalten wird durch Dividieren des Längenwertes L1 der zweiten Laufbahn (K) durch den Durchmesserwert D1 der Kugeln, einen dezimalen Anteil e hat, der im Bereich von 0,2 bis 0,8 liegt.

4. Kugelumlaufspindel nach Anspruch 2, wobei ein Wert L1/D1, der erhalten wird durch Dividieren des Längenwertes L1 der zweiten Laufbahn (K) durch den Durchmesserwert D1 der Kugeln, einen dezimalen Anteil e hat, der im Bereich von 0,4 bis 0,6 liegt.

5. Kugelumlaufspindel nach Anspruch 1 oder 2,
wobei dann, wenn die Mutter (25; 44) relativ zu der Spindelwelle (29) verdreht wird, sich in der ersten Laufbahn (S) bewegende Kugeln (30) sich in der gleichen Richtung um ihre Achsen drehen, und wobei jeweils zwei benachbarte Kugeln (30), die sich in der zweiten Laufbahn (K) bewegen, in entgegen gesetzte Richtungen um ihre Achsen drehen.

6. Kugelumlaufspindel nach Anspruch 1 oder 2,
wobei die Mutter (25; 44) eine erste Schraubennut (33) aufweist, die an einer inneren Umfangsfläche hiervon ausgebildet ist, und zwar zum Rollen der Kugeln (30),
wobei die Spindelwelle (29) eine zweite Schraubennut (34) aufweist, die an einer äußeren Umfangsfläche hiervon ausgebildet ist, und zwar zum Rollen der Kugeln (30),
wobei die erste Laufbahn (S) durch die erste und die zweite Schraubennut (33, 34) definiert ist.

7. Kugelumlaufspindel nach Anspruch 1 oder 2, ferner mit einem U-förmigen Rohr (35), in dem die zweite Laufbahn (K) vorgesehen ist.

8. Elektrische Servolenkvorrichtung (1; 40) mit:

   einem zur Lenkunterstützung dienenden elektrischen Motor (11; 41), der eine Ausgangswelle (20; 43) aufweist;
   einer Lenkwelle (15), die sich quer zu einem Kraftfahrzeug erstreckt und axial bewegbar ist; und
   einer Kugelumlaufspindel (26; 42), die eine Drehung der Ausgangswelle (20; 43) des elektrischen Motors (11; 41) in eine axiale Bewegung der Lenkwelle (15) umsetzt;
   wobei die Kugelumlaufspindel eine Kugelumlaufspindel (26; 42) nach einem der Ansprüche 1 bis 7 ist,
   wobei die Spindelwelle (29) koaxial zu und einstückig mit der Lenkwelle (15) bereitgestellt ist; und
   wobei die zweite Laufbahn (K) das erste und das zweite Ende (S1, S2) der ersten Laufbahn (S) miteinander verbindet, um die Kugeln (30) von dem ersten Ende (S2) zu dem zweiten Ende (S1) der ersten Laufbahn (S) zu zirkulieren.

9. Elektrische Servolenkvorrichtung nach Anspruch 8, wobei die Ausgangswelle (43) des elektrischen Motors (41) eine rohrförmige Ausgangswelle (43) aufweist, die die Lenkwelle (15) umgibt und koaxial zu der Mutter (44) und drehfest mit dieser bereitgestellt ist.

10. Elektrische Servolenkvorrichtung nach Anspruch 9, wobei die rohrförmige Ausgangswelle (43) und die Mutter (44) als ein einstückiges Element einstückig bereitgestellt sind.

11. Elektrische Servolenkvorrichtung nach Anspruch 9 oder 10, wobei der elektrische Motor (41) ein bürstenloser Motor ist.

**Revendications**

1. Vis à billes (26; 42), qui comporte une tige filetée (29), un écrou (25; 44) entourant la tige filetée (29), et une pluralité de billes (30) pouvant s'engager avec la tige filetée (29) et l'écrou (25; 44), la vis à billes (26; 42) comprenant:

   un premier chemin de roulement hélicoïdal (S) défini entre la tige filetée (29) et l'écrou (25; 44) et ayant des première et deuxième extrémités (S1, S2); et
   un deuxième chemin de roulement (K) ayant des première et deuxième extrémités (K1, K2) connectées respectivement aux première et deuxième extrémités (S1, S2) du premier chemin de roulement (S) pour faire circuler les billes (30) dans le premier chemin de roulement (S);

**caractérisée en ce que**

le deuxième chemin de roulement (K) reçoit un nombre impair de billes (30) au maximum à chaque fois.

2. Vis à billes selon la revendication 1, dans laquelle le deuxième chemin de roulement (K) a une valeur de longueur L1 qui satisfait à l'expression suivante:

$$(2N + 1)\, D1 < L1 < (2N + 2)\, D1,$$

dans laquelle D1 est une valeur du diamètre de chacune des billes (30) et N est un nombre entier arbitraire.

3. Vis à billes selon la revendication 2, dans laquelle une valeur L1/D1 qui est obtenue en divisant la valeur de longueur L1 du deuxième chemin de roulement (K) par la valeur du diamètre D1 de la bille a une fraction décimale e comprise entre 0,2 et 0,8.

4. Vis à billes selon la revendication 2, dans laquelle une valeur L1/D1 qui est obtenue en divisant la valeur de longueur L1 du deuxième chemin de roulement (K) par la valeur du diamètre D1 de la bille a une fraction décimale e comprise entre 0,4 et 0,6.

5. Vis à billes selon la revendication 1 ou 2, dans laquelle, lorsque l'écrou (25 ; 44) est tourné par rapport à la tige filetée (29), des billes (30) se déplaçant dans le premier chemin de roulement (S) tournent autour de leurs axes dans la même direction, et chaque paire de billes adjacentes (30) se déplaçant dans le deuxième chemin de roulement (K) tournent autour de leurs axes dans des directions opposées.

6. Vis à billes selon la revendication 1 ou 2,
dans laquelle l'écrou (25 ; 44) a une première gorge hélicoïdale (33) formée dans une surface périphérique interne de celui-ci pour faire rouler les billes (30),
la tige filetée (29) ayant une deuxième gorge hélicoïdale (34) formée dans une surface périphérique externe de celle-ci pour faire rouler les billes (30),
le premier chemin de roulement (S) étant défini par les première et deuxième gorges hélicoïdales (33, 34).

7. Vis à billes selon la revendication 1 ou 2, comprenant en outre un tube en forme de U (35) dans lequel le deuxième chemin de roulement (K) est prévu.

8. Dispositif de direction assistée électrique (1; 40) comprenant:

un moteur électrique d'assistance à la direction (11; 41) comportant un arbre de sortie (20; 43) ;
un arbre de direction (15) s'étendant transversalement à un véhicule automobile et déplaçable axialement ; et
une vis à billes (26; 42) qui convertit la rotation de l'arbre de sortie (20; 43) du moteur électrique (11; 41) en un mouvement axial de l'arbre de direction (15);
la vis à billes étant une vis à billes (26; 42) selon l'une quelconque des revendications 1 à 7,
la vis à billes (29) étant prévue coaxialement et de manière unitaire avec l'arbre de direction (15); et
le deuxième chemin de roulement (K) reliant les première et deuxième extrémités (S1, S2) du premier chemin de roulement (S) l'une à l'autre pour faire circuler les billes (30) de la première extrémité (S2) à la deuxième extrémité (S1) du premier chemin de roulement (S).

9. Dispositif de direction assistée électrique selon la revendication 8, dans lequel l'arbre de sortie (43) du moteur électrique (41) comporte un arbre de sortie tubulaire (43) entourant l'arbre de direction (15) et prévu coaxialement avec l'écrou (44) de manière à tourner avec lui.

10. Dispositif de direction assistée électrique selon la revendication 9, dans lequel l'arbre de sortie tubulaire (43) et l'écrou (44) sont prévus de manière unitaire en tant qu'organe unitaire.

11. Dispositif de direction assistée électrique selon la revendication 9 ou 10, dans lequel le moteur électrique (41) est un moteur sans balais.

FIG. 1

CONTROL SECTION 10

SPEED SENSOR 9

EP 1 630 456 B1

FIG. 2

EP 1 630 456 B1

# FIG. 3

CONTROL SECTION — 10

EP 1 630 456 B1

11

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002181155 A
- JP 2002061731 B